# EUROPEAN PATENT SPECIFICATION

(11) **EP 4 215 931 B1**
(45) Date of publication and mention of the grant of the patent: **01.07.2026**
(21) Application number: 22153255.9
(22) Date of filing: 25.01.2022
(51) Int. Cl.: G01S 5/02

(54) **DETERMINING A VEHICLE LOCATION**
BESTIMMUNG EINES FAHRZEUGSTANDORTS
DÉTERMINATION D'UN EMPLACEMENT DE VÉHICULE

(43) Date of publication of application: 26.07.2023
(73) Proprietor: ryd GmbH, 80636 München (DE)
(72) Inventor: Malek, Moni, 80636 München (DE); Federwisch, Alexander, 80636 München (DE)
(74) Representative: Keller Schneider Patentanwaltsgesellschaft mbH

(56) References cited:
- WO-A1-2016/153435
- US-A1- 2017 074 964
- US-A1- 2021 089 772

## Description

### FIELD OF THE INVENTION

The present invention relates to the field of automotive tracking systems, and in particular to the field of determining a location of a vehicle.

### BACKGROUND OF THE INVENTION

Internet of Things (IoT) devices are used for a vast range of applications. A typical element of an IoT device is a mobile communication unit which enables the IoT device to perform wireless data communications with a backend server. In many automotive applications, there is the further requirement that it must be possible to determine the location of a vehicle the IoT device is installed in. This is often done using signals from a global navigation satellite system (GNSS), such as the Global Positioning System (GPS), the Russian Global Navigation Satellite System (GLONASS), the European Galileo system, and the Chinese BeiDou System (BDS).

Document EP 2 378 311 A1 discloses a technique which enables a single integrated circuit to both communicate over a cellular network and receive signals from a GNSS. However, even if the additional costs for such circuitry are small, they are not zero. Particular difficulties arise from the need of providing a suitable high frequency receiver unit and antenna for the radio signals of the GNSS. This not only concerns the costs for the electronic components, but also the increased space requirements and the requirement that the antenna for the radio signals of the GNSS must be mounted at a location which facilitates good reception of these signals. The latter requirement may in fact be a substantial obstacle for automotive applications, as it increases the size of an in-vehicle device, restricts the possible mounting locations of the device within the vehicle, and may even necessitate use of an external antenna with an antenna cable.

Consequently, a need exists for an in-vehicle device, and/or a system comprising an in-vehicle device, which provide/s the capability of determining a position of a vehicle as inexpensively as possible.

US 2017/0074964 A1 discloses techniques for location estimation and navigation of autonomous vehicles. An autonomous vehicle location estimation engine is provided with inputs from multiple sources including, for example, GPS data, WiFi data, cellular data, and radio signals from smart street lights having integrated RFID technology. The autonomous vehicle location estimation engine further receives map data, which includes map artifact data describing road segment topology and geometry. The autonomous vehicle location estimation engine uses a hybrid location estimation algorithm to combine these inputs and determine the location of the autonomous vehicle. The map data is used in a matching process that associates the vehicle's GPS position (latitude, longitude, altitude), and optionally heading and speed information, to a road segment. The real time location information is sent to a vehicle control center for autonomous vehicle management and monitoring vehicle location.

WO 2016/153435 A1 discloses a system and method for determining a location of a vehicle. A path navigated by the vehicle is estimated by an inertial navigation system. One or more candidate curve segments are obtained from a road network database, and one of the candidate curve segments is identified as matching a curve segment of the navigated path. The location is determined based on the identified matching curve segment.

US 2021/0089772 A1 discloses a use of a robot and/or a computer system to generate position information of the robot operating in an operating space that is subdivided into a plurality of cells.

### OBJECTS AND SUMMARY OF THE INVENTION

It is an object of the present invention to provide a technique for determining a location of a vehicle without relying on any signals received from a global navigation satellite system.

The present invention is defined by the independent claims. The dependent claims concern optional features of some embodiments of the invention.

The present invention is based on the surprising finding that the location of the vehicle can be determined, with a suitable degree of accuracy and reliability, from pieces of information which are available to many in-vehicle devices in any case, namely cell-related data and vehicle-related data. The cell-related data is determined by a communication unit which wirelessly communicates with a cellular communication network, and the vehicle-related data is determined by an interface unit which is connected to a data port of the vehicle. Suitable information from the cell-related data and the vehicle-related data may be combined with map information to determine a route the vehicle is most likely taking, and a location of the vehicle on this route at a particular point in time.

Embodiments of the present invention avoid the need of using any signals from a global navigation satellite system (GNSS) for determining the location of the vehicle. This not only saves costs by reducing the number of components, but also reduces the volume of the in-vehicle device and increases the options of installing the in-vehicle device at any desired place in the vehicle, including places which have no adequate GNSS signal reception. No GNSS antenna is required, which significantly contributes to the benefits of the present invention. For example, an internal GNSS antenna integrated into the in-vehicle device would significantly add to the overall size of the device and would restrict the possible mounting locations, while an external GNSS antenna would be expensive to install and may be unreliable due to the required high frequency (HF) cable connection.

A surprising further advantage is that embodiments of the present invention continue to provide location information even if the GNSS signal is unavailable. For example, it has become more and more common for thieves to use a GNSS jammer (such as a GPS jammer) when stealing an expensive car or a commercial vehicle, in order to thwart known tracking systems. The present invention provides a possibility for a tracking system or anti-theft device which is not susceptible to attack with a GNSS jammer.

The order in which the operations and method steps are recited in the claims should not be construed as limiting. It is apparent that many of these operations and method steps can be performed in a different order or wholly or partially parallel or wholly or partially interleaved with each other.

The machine-readable medium according to the present disclosure may comprise suitable program instructions to realize the recited operations, for example on a general-purpose computer, or on a device comprising a processor, or in a programmable integrated circuit. The machine-readable medium may be any kind of transitory or non-transitory data carrier like, for example, a computer disk, or a CD-ROM, or a semiconductor memory, or a signal transmitted via a carrier wave over a computer network.

### BRIEF DESCRIPTION OF THE DRAWINGS

Further features, objects and advantages of the invention will become apparent from the following detailed description, in connection with the annexed schematic drawings, in which:
Fig. 1 shows a schematic representation of a vehicle with an in-vehicle device according to embodiments of the present invention.
Fig. 2 shows a schematic representation of a plurality of cells of a cellular communication network.
Fig. 3 shows a schematic diagram of certain data items and data processing entities according to embodiments of the present invention.
Fig. 4 and Fig. 5 show schematic diagrams similar to the diagram shown in Fig. 3 for alternative embodiments of the present invention.

### DETAILED DESCRIPTION OF EMBODIMENTS OF THE INVENTION

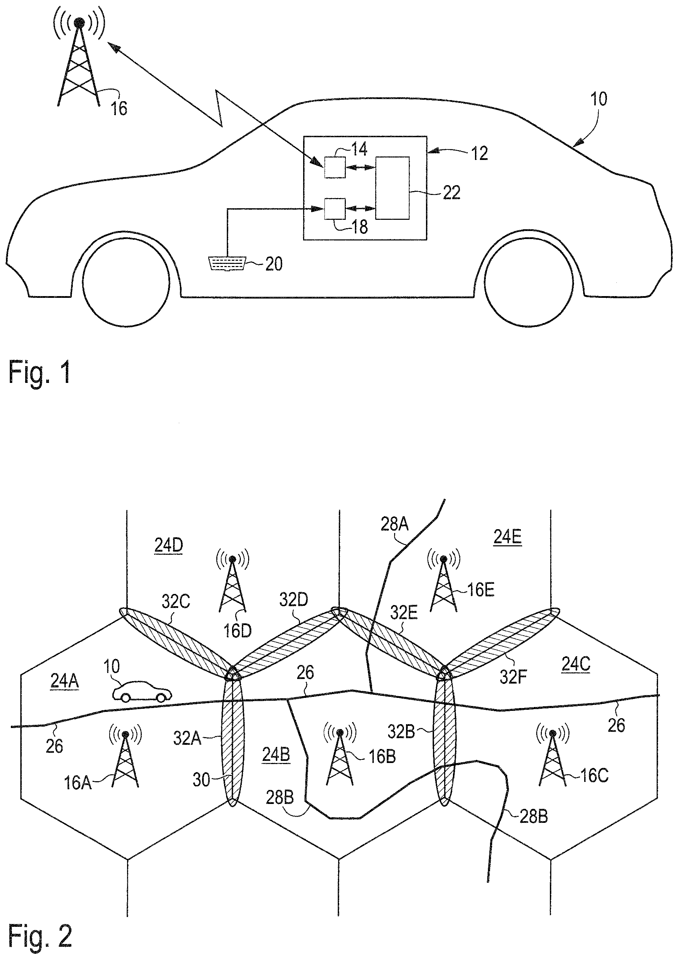

Fig. 1 shows a vehicle 10, such as a car or bus or commercial vehicle, in which an in-vehicle device 12 according to embodiments of the present invention is installed. The in-vehicle device 12 comprises a communication unit 14 which is adapted to perform wireless radio communications with a cellular communication network; the cellular communication network is schematically depicted in Fig. 1 by a cell tower 16 comprising one or more base stations. The in-vehicle device 12 further comprises an interface unit 18 connected to a data port 20 of the vehicle 10. A processing unit 22 of the in-vehicle device 12 is connected to, and controls operation of, both the communication unit 14 and the interface unit 18; the functions of the processing unit 22 in different embodiments of the present invention will be described in detail below. In various embodiments, some or all of the functions of the processing unit 22 can be implemented by at least one dedicated hardware processor, or by a software module executed by a processor which also performs certain functions of the communication unit 14 and/or the interface unit 18.

In some embodiments, the data port 20 may be a diagnosis or control port which is known as such and is commonly used in vehicles. For example and without limitation, the data port 20 may be configured according to the OBD, OBD2, or EOBD specifications, comprising a standardized physical connector socket, standardized electrical properties, and a standardized communication protocol. The in-vehicle device 12 may have the form of a compact dongle which may be integrated with a plug fitting into the connector socket of the data port 20, or may be connected to such a plug via a cable.

The cellular communication network with which the communication unit 14 communicates may generally be according to any kind of network standard, but it is preferably a network which has a relatively small typical cell size. In some embodiments, the typical cell size may be at most 5 km, or in further embodiments at most 2 km, or in yet further embodiments in the range of 0.5 km through 2 km, or in even further embodiments approximately 1 km. In some embodiments, the cellular communication network may have a maximum cell size of at most 5 km, or in further embodiments a maximum cell size of at most 2 km. The cellular communication network may be, for example, a 4G or 5G or higher network, or in some embodiments a 4G LTE network, or in further embodiments a 4G LTE Cat M1 network. For example, the cell size of the presently used cellular telecommunication network may be smaller than the cell size of a 2G GSM network, which is typically about 10 km. Such a large cell size may still be suitable for some embodiments of the present invention, but for other embodiments the reliability of the determined location may be too low.

In many embodiments, the communication unit 14 of the in-vehicle device 12 comprises a suitable antenna according to the applicable network standard, the antenna being integrated into the in-vehicle device 12. Embodiments are also envisaged in which the communication unit 14 has an antenna connector to be connected to an external mobile communication antenna of the vehicle 10. Importantly, in most embodiments the in-vehicle device 12 does not comprise any antenna used to receive signals from a global navigation satellite system such as GPS or GLONASS or Galileo or BeiDou. This considerably reduces the size of the in-vehicle device 12 and maximizes the possibilities for installing the in-vehicle device 12 at any desired location within the vehicle 10, without having regard to any requirements that the in-vehicle device 12 must be able to receive the (generally rather weak) signals of the global navigation satellite system.

Fig. 2 schematically depicts an arrangement of cells 24A-24E of the cellular communication network. Each of the cells 24A-24E is defined by the presence of an associated cell tower 16A-16E, wherein each of the cell towers 16A-16E comprises one or more base stations. The cells 24A-24E are shown in Fig. 2 as being generally hexagonal, but it is apparent to the skilled person that the cell shape of an actual cellular communication network is heavily influenced by properties of the terrain and the actual locations of the cell towers 16A-16E and associated base stations. Fig. 2 further shows a travel route 26 along which the vehicle 10 is traveling, as well as two side routes 28A, 28B which branch off the travel route 26.

While the vehicle 10 is well within one of the cells 24A-24E, the communication unit 14 is registered with a respective base station of this cell 24A-24E, and an identifier of this cell 24A-24E or base station is available to the communication unit 14 and the processing unit 22. When the vehicle 10 approaches a boundary between two cells 24A-24E, such as the boundary 30 between the cells 24A and 24B shown in Fig. 2, a handover from the first cell 24A to the second cell 24B takes place. The point in time, and thus the location of the vehicle 10, at which the handover occurs is influenced by certain additional factors and is not exactly known in advance, but it can be assumed that this location will be somewhere in the region 32A marked as a handover region by a hatched area in Fig. 2. Regions 32B-32F represent further possible handover regions between further pairs of the cells 24A-24E.

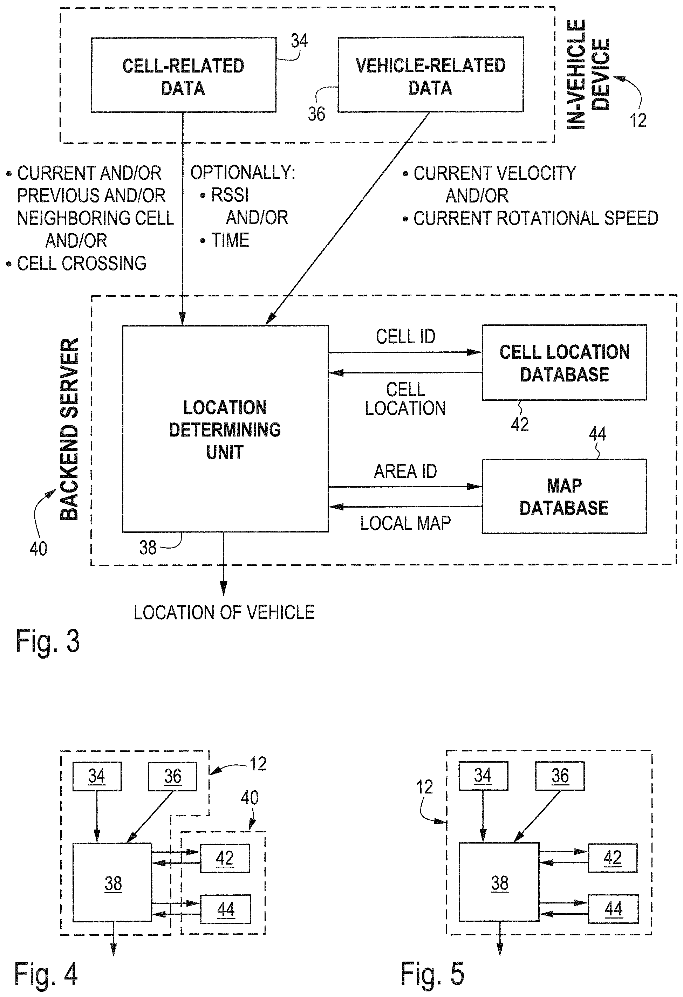

Fig. 3 exemplifies the operation of the components described above, according to some embodiments of the present invention. The communication unit 14 obtains cell-related data 34 regarding the calls 24A-24E of the cellular communication network. The cell-related data 34 includes, without limitation, at least some of:
- an identifier of the current cell 24A-24E the communication unit 14 is presently registered in (such as an identifier of cell 24A in the example of Fig. 2),
- an identifier of a cell 24A-24E the communication unit 14 was formerly registered in (such as a previous cell identifier or a sequence of previous cell identifiers),
- an identifier of a neighboring cell 24A-24E the vehicle 10 is close to or is presently approaching (such as an identifier of cell 24B in the example of Fig. 2), and/or
- an indication of a currently occurring or expected or recently occurred handover operation (such as an indication that a handover from cell 24A to cell 24B has taken place or is expected to take place in the example of Fig. 2).

In some embodiments, there may be further auxiliary (i.e., optional) pieces of information in the cell-related data 34, such as one or more of:
- an RSSI (received signal strength indicator), which gives an approximate indication of how far the communication unit 14 is away from the cell tower 16A-16E of the current cell 24A-24E, but is influenced by a variety of random factors, and/or
- time information from the cellular communication network.

The interface unit 18 of the in-vehicle device 12 receives vehicle-related data 26 from the data port 20, such as an OBD port. In many embodiments, the vehicle-related data 26 comprises an indication of the current velocity of the vehicle 10, which is provided by the vehicle's control system. The data port 20 provides numerous further information items, which may or may not be usable to help in determining the current vehicle location. For example, an indication of the current rotational speed (RPM) of an engine of the vehicle 10 may be useful instead of or in addition to the velocity information, especially in electric cars which have a fixed gear ratio or only two gears. The RPM indication can then also be used to obtain at least some information regarding the current velocity, or a number of possible velocities, of the vehicle 10.

In the embodiment shown in Fig. 3, the communication unit 14 sends the cell-related data 34 and the vehicle-related data 36 to a location determining unit 38 of a backend server 40, using a data transmission functionality of the cellular communication network. In some embodiments, the backend server 40 is a cloud-based server, and the location determining unit 38 may be a software module or a software container executed as one of many tasks of a processor of the backend server 40.

In some embodiments, the in-vehicle device 12 sends additional pieces of information to the location determining unit 38, such as one or more of:
- time information obtained from the cellular communication network or an NTP time server accessed via the communication unit 14 or a real-time clock of the in-vehicle device 12,
- acceleration data from an acceleration sensor of the in-vehicle device 12, and/or
- data from a gyroscope of the in-vehicle device 12.

The location determining unit 38 uses the data received from the in-vehicle device 12 to determine a location of the vehicle 10. In many embodiments it will be desirable that the determined location is as current as possible. However, there may also be embodiments in which the location determining unit 38 is configurable to determine a past location of the vehicle 10 (possibly with increased accuracy and/or reliability), or an expected future location of the vehicle 10.

As explained above, each handover operation provides information about (e.g., identifiers of) an old cell the vehicle 10 leaves (e.g., cell 24A), and a new cell the vehicle 10 enters into (e.g., cell 24B). The location determining unit 38 queries a cell location database 42 using the cell identifiers, and receives information regarding locations of the respective cells (e.g., a sequence of coordinates defining a boundary 30 between the cells 24A, 24B). The cell location database 42 may be obtained from an operator of the cellular communication network, or from public or proprietary 3rd party sources, or by collecting measurement data using in-vehicle devices which include, or have access to, GNSS positioning information. For example, a company having a substantial number of users of the in-vehicle devices 10 may choose to modify a small percentage of these devices by including GNSS receivers, and may use these modified devices to collect cell location information which is transmitted to the backend server 40 and stored in the cell location database 42. This cell location information can then be used for determining the respective locations of other in-vehicle devices 10 according to the presently described embodiments.

Based on the cell location information received from the cell location database 42, and taking into account typical uncertainties and random errors, the location determining unit 38 determines a region (e.g., region 32A) in which the vehicle 10 is expected to be located at the time of the handover operation. This information is used to determine a likely travel route 26 of the vehicle 10 on a local map. In the presently described embodiment, the location determining unit 38 obtains the local map from a map database 44, based on a database query which contains an area identifier of the general area the vehicle 10 is located in (e.g., an area which corresponds to the current cell 24A and surrounding cells).

In the example of a cellular communication network according to the 4G LTE standard, a typical cell size may be approximately 1 km. However, for many applications even this relatively small cell size is still too large to determine the location of the vehicle 10 with sufficient accuracy and/or reliability. In particular, unless the network of possible routes in a particular area is very sparse, it is likely that there are several possible routes the vehicle 10 may have taken on its way through the sequence of determined cells (e.g., cells 24A → 24B → 24C) and regions of handover operations (e.g., regions 32A → 32B). For example, in the situation shown in Fig. 2, it would not be possible to determine from the cell-related data 34 alone if the vehicle 10 is presently on route 26 or route 28B when the vehicle 10 reaches the region 32B after having traveled through cell 24B. The presently described embodiments resolve this situation by taking some or all of the data supplied by the vehicle 10 over the data port 20 into account in order to provide additional information to which various possible routes (e.g., 26 or 28B) of the vehicle 10 may be "fitted". In many embodiments, this additional information is or includes information regarding the velocity of the vehicle 10. The additional information is used as an extra criterion for matching the possible routes determined from the map information to all of the available pieces of information, and for determining the best matching route.

For example, if the velocity of the vehicle 10 at various points in time is known, the location determining unit 38 can calculate the distance covered by the vehicle 10 while the vehicle 10 crossed a cell 24A-24E, i.e., between two handover operations. This is done by integrating the velocity profile of the vehicle 10 over time. Returning to the example of Fig. 2, when the total distance traveled by the vehicle 10 in cell 24B is known, the location determining unit 38 can make a determination whether the vehicle 10 has traveled the shorter route 26 or the longer route 28B within the cell 24B. Assuming a determination, based on the traveled distance, that the vehicle 10 is on route 26, the location of the vehicle 10 at the time of the handoff operation from cell 24B to cell 24C can then be determined with reasonable accuracy as the position where the route 26 intersects with the region 32B.

In some embodiments, further information from the map database 44 is used when determining the route 26, 28A, 28B of the vehicle 10. For example, if the map database 44 contains the locations of traffic lights, then a short stop of the vehicle 10 may indicate that the vehicle 10 was at the position of a traffic light. Similar determinations may be made for portions of the route 26, 28A, 28B having particular speed limits, or for portions which show a narrow road, or steep descents or inclines. Furthermore, a brief stop or deceleration of a vehicle 10 on a route which has the right of way may indicate that the vehicle 10 has turned onto a side route. Yet further, when even more information is available, such as data from a gyroscope and/or an accelerometer integrated in the in-vehicle unit 12, this additional information can also be used by the location determining unit 38 to increase the reliability of the determined position. For example, the data from the gyroscope can be used to detect turning, and the data from the accelerometer can be used to detect linear acceleration. This extra information can be used, in some embodiments, to identify the most likely route the vehicle 10 has taken inside a cell 24A-24E.

All in all, the inventors have found that the position of the vehicle 10 can generally be determined with a reasonable accuracy and reliability for cell sizes which are typical for cellular telecommunication networks according to at least 4G or 5G standards. These cell sizes are not fixed, but depend on the population density in each particular area. In rural or other sparsely populated areas (i.e., small population densities), the cell sizes tend to be bigger, but this is often compensated by the fact that there are fewer roads, which reduces the complexity of matching the roads shown on the local map to the available cell-related data 34 and vehicle-related data 36. Conversely, in cities or other densely populated areas the cell sizes tend to be small, which helps in solving the map-matching problem.

In the embodiments described above, the processing unit 22 of the in-vehicle device 12 performs only minor functions of formatting and filtering the data received from the communication unit 14 and the interface unit 18, and forwarding this data to the backend server 40 via the cellular communication network. However, there are also embodiments in which the processing unit 22 has more substantial tasks, such as calculating the distance from the velocity data by an integration operation.

Embodiments in which the processing unit 22 performs yet further functions are illustrated in Fig. 4 and Fig. 5. According to the structure shown in Fig. 4, the location determining unit 38 is implemented in the in-vehicle device 12 and may be part of the processing unit 22 or a separate entity. The cell location database 42 and the map database 44 shown in Fig. 4 are still located at the backend server 40, and are accessed by the location determining unit 38 of Fig. 4 over the cellular telecommunication network via the communication unit 14.

According to the further alternative shown in Fig. 5, all functions necessary for determining the location of the vehicle 10 are implemented within the in-vehicle device 12. This includes the cell location database 42 and the map database 44, which are locally stored within the in-vehicle device 12 and may be periodically updated, or adapted to different areas the vehicle 10 travels in, via the communication unit 14.

Yet further distributions of the various units of the present invention between the in-vehicle device 12, the backend server 40 (if any), and potentially further servers or services are possible. For example, the in-vehicle device 12 may access an app running on a mobile telephone or smartphone of a user, or an on-board computer of the vehicle 10, to obtain certain data and/or perform certain processing functions.

Numerous uses of the presently discussed techniques are possible. For example and without limitation, the determined location information can be used for anti-theft applications and geofencing, for telemetry, to determine prices and rates (such as rental rates or insurance rates), to provide guidance and assistance to drivers, to track vehicles, to issue emergency alarms, and so on.

The particulars contained in the above description of sample embodiments should not be construed as limitations of the scope of the invention, but rather as exemplifications of some embodiments thereof. Many variations are possible and are immediately apparent to persons skilled in the arts. In particular, this concerns variations that comprise a combination of features disclosed in the present specification.

### LIST OF REFERENCE SIGNS

- 10: vehicle
- 12: in-vehicle device
- 14: communication unit
- 16, 16A-16E: cell tower
- 18: interface unit
- 20: data port
- 22: processing unit
- 24A-24E: cell
- 26: travel route
- 28A, 28B: side route
- 30: boundary
- 32A-32F: region
- 34: cell-related data
- 36: vehicle-related data
- 38: location determining unit
- 40: backend server
- 42: cell location database
- 44: map database

## Claims

1. A method for determining a location of a vehicle (10), the method comprising:
- determining cell-related data (34) by a communication unit (14) which is part of an in-vehicle device (12) and which wirelessly communicates with a cellular communication network,
- determining vehicle-related data (36) by an interface unit (18) which is part of the in-vehicle device (12) and which is connected to a data port (20) of the vehicle (10), and
- determining a location of the vehicle (10) from at least:
-- cell-related information, contained in the cell-related data (34), about (i) a cell (24A-24E) of the cellular communication network the vehicle (10) is currently or was previously located in, (ii) neighboring cells (24A-24E), and (iii) handover operations between cells (24A-24E),
-- vehicle-related information, contained in the vehicle-related data (36) received via the data port (20) of the vehicle (10), and
-- map information showing possible routes (26, 28A, 28B) the vehicle (10) may be taking,
- wherein said determining a location of the vehicle (10) comprises:
-- determining a sequence of handover regions (32A-32F) the vehicle (10) was in at multiple points in time, wherein the sequence of handover regions (32A-32F) comprises:
--- a first handover region (32A) corresponding to possible locations the vehicle (10) was in during a first handover operation between a first cell (24A) and a second cell (24B) of the cellular communication network, and
--- a second handover region (32B) corresponding to possible locations the vehicle (10) was in during a second handover operation between the second cell (24B) and a third cell (24C) of the cellular communication network,
-- determining a distance the vehicle (10) has traveled while the vehicle (10) crossed the second cell (24B) of the cellular communication network between the first handover operation and the second handover operation,
-- determining that the vehicle has traveled a particular route (28B) within said second cell (24B) by matching said determined distance to lengths of a number of possible routes (26, 28B) the vehicle (10) may have taken in said second cell (24B), as determined from the map information, and
-- determining said location of the vehicle (10) as a position where said particular route (28B) intersects with said second handover region (32B).

2. The method of claim 1, wherein said determining a location of the vehicle (10) utilizes cell location information which associates cell identifiers in the cell-related data (34) with cell locations.

3. The method of claim 1 or claim 2, wherein the vehicle-related information comprises information about at least one of (i) a velocity of the vehicle (10), and/or (ii) a rotational speed of an engine of the vehicle (10).

4. The method of claim 1 or claim 2, wherein the vehicle-related information comprises information about a velocity of the vehicle (10), and wherein said distance the vehicle (10) has traveled is determined from multiple indications of respectively current velocities of the vehicle (10) at multiple points in time.

5. The method of claim 1 or claim 2, wherein the vehicle-related information comprises information about a velocity of the vehicle (10), and wherein said distance the vehicle (10) has traveled is determined by integrating a velocity profile of the vehicle (10) over time.

6. The method of any of claims 1-5, wherein the data port (20) of the vehicle (10) is configured according to the OBD or OBD2 of EOBD specifications.

7. The method of any of claims 1-6, wherein the determined location is one of (i) a current location of the vehicle (10), or (ii) a previous location of the vehicle (10).

8. The method of any of claims 1-7, wherein the location of the vehicle (10) is determined without having access to, and/or without using, any location data obtained from a global navigation satellite system.

9. The method of any of claims 1-8, wherein a typical cell size of the cellular communication network is less than 5 km.

10. The method of any of claims 1-9, wherein said determining a location of the vehicle (10) is performed by a backend server (40) external to the in-vehicle device (12).

11. The method of any of claims 1-9, wherein said determining a location of the vehicle (10) is performed by a processing unit (22) of the in-vehicle device (10).

12. The method of any of claims 1-9, wherein said determining a location of the vehicle (10) is performed partly by a processing unit (22) of the in-vehicle device (10) and partly by a backend server (40) external to the in-vehicle device (12).

13. A machine-readable medium having program instructions stored thereon, wherein the program instructions are adapted to cause one or more computing devices, when executing the program instructions, to perform operations including the operations recited in any of claims 1-12.

14. An in-vehicle device (12) for use in a vehicle (10), the in-vehicle device (12) comprising:
- a communication unit (14) adapted for wireless communications with a cellular communication network and adapted for determining cell-related data (34),
- an interface unit (18) adapted to be connected to a data port (20) of the vehicle (10) and adapted for determining vehicle-related data (36), and
- a location determining unit (38) adapted for determining a location of the vehicle (10),
- wherein the in-vehicle device (12) is adapted for performing operations including the operations recited in any of claims 1-9.

15. A system comprising an in-vehicle device (12) for use in a vehicle (10) and a backend server (40),
- wherein the in-vehicle device (12) comprises:
-- a communication unit (14) adapted for wireless communications with a cellular communication network and adapted for determining cell-related data (34), and
-- an interface unit (18) adapted to be connected to a data port (20) of the vehicle (10) and adapted for determining vehicle-related data (36),
- wherein the backend server (40) comprises:
-- a location determining unit (38) adapted for determining a location of the vehicle (10), and
- wherein the system is adapted for performing operations including the operations recited in any of claims 1-9.

## Patentansprüche

1. Verfahren zum Bestimmen eines Ortes eines Fahrzeugs (10), wobei das Verfahren umfasst:
- Bestimmen von zellenbezogenen Daten (34) durch eine Kommunikationseinheit (14), die Teil einer fahrzeugseitigen Einrichtung (12) ist und die drahtlos mit einem Mobilfunknetz kommuniziert,
- Bestimmen von fahrzeugbezogenen Daten (36) durch eine Schnittstelleneinheit (18), die Teil der fahrzeugseitigen Einrichtung (12) ist und die mit einem Datenanschluss (20) des Fahrzeugs (10) verbunden ist, und
- Bestimmen eines Ortes des Fahrzeugs (10) anhand von mindestens:
-- zellenbezogenen Informationen, die in den zellenbezogenen Daten (34) enthalten sind, über (i) eine Zelle (24A-24E) des Mobilfunknetzes, in der sich das Fahrzeug (10) derzeit befindet oder zuvor befand, (ii) benachbarte Zellen (24A-24E), und (iii) Übergabevorgänge zwischen Zellen (24A-24E),
-- fahrzeugbezogene Informationen, die in den über den Datenanschluss (20) des Fahrzeugs (10) empfangenen fahrzeugbezogenen Daten (36) enthalten sind, und
-- Karteninformationen, die mögliche Routen (26, 28A, 28B) zeigen, die das Fahrzeug (10) nehmen könnte,
- wobei das Bestimmen eines Ortes des Fahrzeugs (10) umfasst:
-- Bestimmen einer Abfolge von Übergabebereichen (32A-32F), in denen sich das Fahrzeug (10) zu mehreren Zeitpunkten befand, wobei die Abfolge von Übergabebereichen (32A-32F) umfasst:
--- einen ersten Übergabebereich (32A), der möglichen Orten entspricht, an denen sich das Fahrzeug (10) während eines ersten Übergabevorgangs zwischen einer ersten Zelle (24A) und einer zweiten Zelle (24B) des Mobilfunknetzes befand, und
--- einen zweiten Übergabebereich (32B), der möglichen Orten entspricht, an denen sich das Fahrzeug (10) während eines zweiten Übergabevorgangs zwischen der zweiten Zelle (24B) und einer dritten Zelle (24C) des Mobilfunknetzes befand,
-- Bestimmen einer Strecke, die das Fahrzeug (10) zurückgelegt hat, während das Fahrzeug (10) die zweite Zelle (24B) des Mobilfunknetzes zwischen dem ersten Übergabevorgang und dem zweiten Übergabevorgang durchquerte,
-- Bestimmen, dass das Fahrzeug eine gewisse Route (28B) innerhalb der zweiten Zelle (24B) zurückgelegt hat, indem die bestimmte Strecke mit Längen einer Anzahl möglicher Routen (26, 28B) abgeglichen wird, die das Fahrzeug (10) in der zweiten Zelle (24B) genommen haben könnte, wie aus den Karteninformationen bestimmt, und
-- Bestimmen des Ortes des Fahrzeugs (10) als eine Position, an der die gewisse Route (28B) den zweiten Übergabebereich (32B) schneidet.

2. Verfahren nach Anspruch 1, wobei das Bestimmen eines Ortes des Fahrzeugs (10) Zellenortsinformationen nutzt, die Zellenkennungen in den zellenbezogenen Daten (34) mit Zellenorten in Beziehung setzen.

3. Verfahren nach Anspruch 1 oder Anspruch 2, wobei die fahrzeugbezogenen Informationen Informationen über mindestens eine von (i) einer Geschwindigkeit des Fahrzeugs (10) und/oder (ii) einer Drehzahl eines Motors des Fahrzeugs (10) umfassen.

4. Verfahren nach Anspruch 1 oder Anspruch 2, wobei die fahrzeugbezogenen Informationen Informationen über eine Geschwindigkeit des Fahrzeugs (10) umfassen, und wobei die von dem Fahrzeug (10) zurückgelegte Strecke aus mehreren Angaben von jeweils aktuellen Geschwindigkeiten des Fahrzeugs (10) zu mehreren Zeitpunkten bestimmt wird.

5. Verfahren nach Anspruch 1 oder Anspruch 2, wobei die fahrzeugbezogenen Informationen Informationen über eine Geschwindigkeit des Fahrzeugs (10) umfassen, und wobei die von dem Fahrzeug (10) zurückgelegte Strecke durch Integration eines Geschwindigkeitsprofils des Fahrzeugs (10) über die Zeit bestimmt wird.

6. Verfahren nach einem der Ansprüche 1-5, wobei der Datenanschluss (20) des Fahrzeugs (10) gemäß der OBD- oder OBD2- oder EOBD-Spezifikation konfiguriert ist.

7. Verfahren nach einem der Ansprüche 1-6, wobei der bestimmte Ort einer der folgenden Orte ist: (i) ein aktueller Ort des Fahrzeugs (10) oder (ii) ein vorheriger Ort des Fahrzeugs (10).

8. Verfahren nach einem der Ansprüche 1-7, wobei der Ort des Fahrzeugs (10) ohne Zugriff auf und/oder ohne Verwendung von Ortungsdaten, die von einem globalen Navigationssatellitensystem erhalten werden, bestimmt wird.

9. Verfahren nach einem der Ansprüche 1-8, wobei eine typische Zellengröße des Mobilfunknetzes weniger als 5 km beträgt.

10. Verfahren nach einem der Ansprüche 1-9, wobei das Bestimmen eines Ortes des Fahrzeugs (10) von einem Hintergrund-Server (40) außerhalb der fahrzeugseitigen Einrichtung (12) durchgeführt wird.

11. Verfahren nach einem der Ansprüche 1-9, wobei das Bestimmen eines Ortes des Fahrzeugs (10) von einer Verarbeitungseinheit (22) der fahrzeugseitigen Einrichtung (12) durchgeführt wird.

12. Verfahren nach einem der Ansprüche 1-9, wobei das Bestimmen eines Ortes des Fahrzeugs (10) teilweise von einer Verarbeitungseinheit (22) der fahrzeugseitigen Einrichtung (12) und teilweise von einem Hintergrund-Server (40) außerhalb der fahrzeugseitigen Einrichtung (12) durchgeführt wird.

13. Maschinenlesbares Medium, auf dem Programmanweisungen gespeichert sind, wobei die Programmanweisungen dazu eingerichtet sind, eine Recheneinrichtung oder mehrere Recheneinrichtungen zu veranlassen, wenn die Programmanweisungen ausgeführt werden, Operationen auszuführen, die die in einem der Ansprüche 1-12 genannten Operationen umfassen.

14. Fahrzeugseitige Einrichtung (12) zur Verwendung in einem Fahrzeug (10), wobei die fahrzeugseitige Einrichtung (12) umfasst:
- eine Kommunikationseinheit (14), die zur drahtlosen Kommunikation mit einem Mobilfunknetz eingerichtet ist und zum Bestimmen von zellbezogenen Daten (34) eingerichtet ist,
- eine Schnittstelleneinheit (18), die dazu eingerichtet ist, mit einem Datenanschluss (20) des Fahrzeugs (10) verbunden zu werden, und die zum Bestimmen von fahrzeugbezogenen Daten (36) eingerichtet ist, und
- eine Ortsbestimmungseinheit (38), die dazu eingerichtet ist, einen Ort des Fahrzeugs (10) zu bestimmen,
- wobei die fahrzeugseitige Einrichtung (12) dazu eingerichtet ist, Operationen auszuführen, die die in einem der Ansprüche 1-9 genannten Operationen umfassen.

15. System, das eine fahrzeugseitige Einrichtung (12) zur Verwendung in einem Fahrzeug (10) und einen Hintergrund-Server (40) umfasst,
- wobei die fahrzeugseitige Einrichtung (12) umfasst:
-- eine Kommunikationseinheit (14), die zur drahtlosen Kommunikation mit einem Mobilfunknetz eingerichtet ist und zum Bestimmen von zellenbezogenen Daten (34) eingerichtet ist, und
-- eine Schnittstelleneinheit (18), die dazu eingerichtet ist, mit einem Datenanschluss (20) des Fahrzeugs (10) verbunden zu werden, und die zum Bestimmen von fahrzeugbezogenen Daten (36) eingerichtet ist,
- wobei der Hintergrund-Server (40) umfasst:
-- eine Ortsbestimmungseinheit (38), die dazu eingerichtet ist, einen Ort des Fahrzeugs (10) zu bestimmen, und
- wobei das System dazu eingerichtet ist, Operationen auszuführen, die die in einem der Ansprüche 1-9 genannten Operationen umfassen.

## Revendications

1. Procédé pour déterminer une position d'un véhicule (10), le procédé comprenant :
- déterminer des données relatives aux cellules (34) par une unité de communication (14) qui fait partie d'un dispositif embarqué (12) et qui communique de manière sans fil avec un réseau de communication cellulaire,
- déterminer des données relatives au véhicule (36) par une unité d'interface (18) qui fait partie du dispositif embarqué (12) et qui est connectée à un port de données (20) du véhicule (10), et
- déterminer une position du véhicule (10) à partir d'au moins :
-- des informations relatives aux cellules, contenues dans les données relatives aux cellules (34), concernant (i) une cellule (24A-24E) du réseau de communication cellulaire dans laquelle le véhicule (10) se trouve actuellement ou se trouvait précédemment, (ii) des cellules voisines (24A-24E), et (iii) des opérations de transfert entre cellules (24A-24E),
-- des informations relatives au véhicule, contenues dans les données relatives au véhicule (36) reçues par l'intermédiaire du port de données (20) du véhicule (10), et
-- des informations cartographiques indiquant des itinéraires possibles (26, 28A, 28B) que le véhicule (10) est susceptible d'emprunter,
- dans lequel ladite détermination d'une position du véhicule (10) comprend :
-- déterminer une séquence de régions de transfert (32A-32F) dans lesquelles le véhicule (10) se trouvait à plusieurs moments, la séquence de régions de transfert (32A-32F) comprenant :
--- une première région de transfert (32A) correspondant aux positions possibles où se trouvait le véhicule (10) pendant une première opération de transfert entre une première cellule (24A) et une deuxième cellule (24B) du réseau de communication cellulaire, et
--- une seconde région de transfert (32B) correspondant aux positions possibles où se trouvait le véhicule (10) pendant une seconde opération de transfert entre la deuxième cellule (24B) et une troisième cellule (24C) du réseau de communication cellulaire,
-- déterminer une distance parcourue par le véhicule (10) alors que le véhicule (10) traversait la deuxième cellule (24B) du réseau de communication cellulaire entre la première opération de transfert et la seconde opération de transfert,
-- déterminer que le véhicule a parcouru un itinéraire particulier (28B) à l'intérieur de ladite deuxième cellule (24B) en faisant correspondre ladite distance déterminée aux longueurs d'un nombre d'itinéraires possibles (26, 28B) que le véhicule (10) a pu emprunter dans ladite deuxième cellule (24B), tels que déterminés à partir des informations cartographiques, et
-- déterminer ladite position du véhicule (10) comme étant une position où ledit itinéraire particulier (28B) croise ladite seconde région de transfert (32B).

2. Procédé selon la revendication 1, dans lequel ladite détermination d'une position du véhicule (10) utilise des informations de position de cellule qui associent des identifiants de cellule dans les données relatives aux cellules (34) à des positions de cellule.

3. Procédé selon la revendication 1 ou la revendication 2, dans lequel les informations relatives au véhicule comprennent des informations concernant au moins l'une parmi (i) une vitesse du véhicule (10) et/ou (ii) une vitesse de rotation d'un moteur du véhicule (10).

4. Procédé selon la revendication 1 ou la revendication 2, dans lequel les informations relatives au véhicule comprennent des informations concernant une vitesse du véhicule (10), et dans lequel ladite distance parcourue par le véhicule (10) est déterminée à partir de multiples indications des vitesses respectivement actuelles du véhicule (10) à plusieurs instants.

5. Procédé selon la revendication 1 ou la revendication 2, dans lequel les informations relatives au véhicule comprennent des informations concernant une vitesse du véhicule (10), et dans lequel ladite distance parcourue par le véhicule (10) est déterminée en intégrant un profil de vitesse du véhicule (10) au cours du temps.

6. Procédé selon l'une quelconque des revendications 1 à 5, dans lequel le port de données (20) du véhicule (10) est configuré conformément aux spécifications OBD ou OBD2 ou EOBD.

7. Procédé selon l'une quelconque des revendications 1 à 6, dans lequel la position déterminée est l'une parmi (i) une position actuelle du véhicule (10) ou (ii) une position précédente du véhicule (10).

8. Procédé selon l'une quelconque des revendications 1 à 7, dans lequel la position du véhicule (10) est déterminée sans avoir accès à, et/ou sans utiliser, de quelconques données de position obtenues à partir d'un système mondial de navigation par satellite.

9. Procédé selon l'une quelconque des revendications 1 à 8, dans lequel une dimension de cellule typique du réseau de communication cellulaire est inférieure à 5 km.

10. Procédé selon l'une quelconque des revendications 1 à 9, dans lequel ladite détermination d'une position du véhicule (10) est effectuée par un serveur dorsal (40) extérieur au dispositif embarqué (12).

11. Procédé selon l'une quelconque des revendications 1 à 9, dans lequel ladite détermination d'une position du véhicule (10) est effectuée par une unité de traitement (22) du dispositif embarqué (12).

12. Procédé selon l'une quelconque des revendications 1 à 9, dans lequel ladite détermination d'une position du véhicule (10) est effectuée en partie par une unité de traitement (22) du dispositif embarqué (12) et en partie par un serveur dorsal (40) extérieur au dispositif embarqué (12).

13. Support lisible par machine sur lequel sont stockées des instructions de programme, dans lequel les instructions de programme sont aptes à amener un ou plusieurs dispositifs informatiques, lors de l'exécution des instructions de programme, à effectuer des opérations comprenant les opérations énoncées dans l'une quelconque des revendications 1 à 12.

14. Dispositif embarqué (12) destiné à être utilisé dans un véhicule (10), le dispositif embarqué (12) comprenant :
- une unité de communication (14) apte à des communications sans fil avec un réseau de communication cellulaire et apte à déterminer des données relatives aux cellules (34),
- une unité d'interface (18) apte à être connectée à un port de données (20) du véhicule (10) et apte à déterminer des données relatives au véhicule (36), et
- une unité de détermination de position (38) apte à déterminer une position du véhicule (10),
- dans lequel le dispositif embarqué (12) est apte à effectuer des opérations comprenant les opérations énoncées dans l'une quelconque des revendications 1 à 9.

15. Système comprenant un dispositif embarqué (12) destiné à être utilisé dans un véhicule (10) et un serveur dorsal (40),
- dans lequel le dispositif embarqué (12) comprend :
-- une unité de communication (14) apte à des communications sans fil avec un réseau de communication cellulaire et apte à déterminer des données relatives aux cellules (34), et
-- une unité d'interface (18) apte à être connectée à un port de données (20) du véhicule (10) et apte à déterminer des données relatives au véhicule (36),
- dans lequel le serveur dorsal (40) comprend :
-- une unité de détermination de position (38) apte à déterminer une position du véhicule (10), et
- dans lequel le système est apte à effectuer des opérations comprenant les opérations énoncées dans l'une quelconque des revendications 1 à 9.
